# EUROPEAN PATENT APPLICATION

(11) **EP 4 636 580 A1**
(43) Date of publication of application: **22.10.2025**
(21) Application number: 23902705.5
(22) Date of filing: 12.12.2023
(51) Int. Cl.: G06F 8/65

(54) **MODEL UPDATING METHOD AND APPARATUS, DEVICE, AND STORAGE MEDIUM**

(30) Priority: 13.12.2022 CN 202211595765
(71) Applicant: Spreadtrum Communications (Shanghai) Co., Ltd., Shanghai 201203 (CN)
(72) Inventor: CHEN, Xiaoyu, Shanghai 201203 (CN)
(74) Representative: Vossius & Partner Patentanwälte Rechtsanwälte mbB
(86) International application number: PCT/CN2023/138162
(87) International publication number: WO 2024/125509

(57) **Abstract**

The present application provides a model updating method and apparatus, a device, and a storage medium. The present application relates to the field of communication technology. The model updating method includes: a terminal device obtains a parameter of a target model; and determines, based on the parameter of the target model, whether to perform a model updating process of the target model. The present application provides a solution for determining whether to perform a model update.

## Description

This application claims priority to Chinese Patent Application No. 202211595765.5, filed to the China National Intellectual Property Administration on December 13, 2022 and entitled "MODEL UPDATING METHOD AND APPARATUS, DEVICE, AND STORAGE MEDIUN", which is hereby incorporated by reference in its entirety.

### TECHNICAL FIELD

The present application relates to the field of communication technology, and in particular to a model updating method and apparatus, a device, and a storage medium.

### BACKGROUND

With the development of application demands and technologies, artificial intelligence (artificial intelligence, AI) and machine learning (machine learning, ML) have been gradually introduced into various fields. Compared with traditional communication system solutions, deploying AI models/ML models on terminal devices can achieve better system performance.

However, during a process of a terminal device using an AI model/ML model, there is currently no solution for determining whether to perform a model update.

### SUMMARY

The present application provides a model updating method and apparatus, a device, and a storage medium, specifically provides a solution for determining whether to perform a model update.

In a first aspect, the present application provides a model updating method, including:
obtaining a parameter of a target model; and
determining, based on the parameter of the target model, whether to perform a model updating process of the target model.

In a possible implementation, the parameter of the target model includes a performance configuration parameter and/or a monitoring objective;
the performance configuration parameter includes one or more of the following information: a model performance indicator of the target model, and a configuration parameter applicable to the target model;
the monitoring objective is any one of the following:
   performance;
   configuration; and
   performance and configuration.
In a possible implementation, the obtaining the parameter of the target model includes:
   obtaining model indication information; and
   determining, based on the model indication information, the parameter of the target model;
   the model indication information is one or more of the following:
      information for indicating a model;
      information for indicating a use case;
      information for indicating a function;
      a model performance indicator of a model;
      a configuration parameter applicable to a model; and
      a monitoring objective corresponding to a model.

In a possible implementation, the method further includes:
determining a monitoring result of the target model, where the monitoring result is used for representing performance and/or configuration of the target model;
the determining, based on the parameter of the target model, whether to perform the model updating process of the target model, includes:
   determining, based on the monitoring result and the parameter of the target model, whether to perform the model updating process of the target model.

In an implementation, the method further includes:
obtaining an update condition;
the determining, based on the monitoring result and the parameter of the target model, whether to perform the model updating process of the target model, includes:
   determining, based on the performance configuration parameter, the monitoring result, and the update condition, whether to perform the model updating process of the target model.

In a possible implementation, the determining, based on the monitoring result and the parameter of the target model, whether to perform the model updating process of the target model, includes:
obtaining an update condition based on the monitoring objective; and
determining, based on the performance configuration parameter, the monitoring result, and the update condition, whether to perform the model updating process of the target model.

In a possible implementation, the determining, based on the performance configuration parameter, the monitoring result, and the update condition, whether to perform the model updating process of the target model, includes:
when the monitoring result and the performance configuration parameter satisfy the update condition, determining to perform the model updating process of the target model.

In a possible implementation, when the monitoring result includes a model performance monitoring result, the update condition is that the model performance monitoring result does not match the model performance indicator of the target model;
when the monitoring result includes a model configuration monitoring result, the update condition is that the model configuration monitoring result does not match the configuration parameter applicable to the target model; and
when the monitoring result includes both a model performance monitoring result and a model configuration monitoring result, the update condition is: the model performance monitoring result does not match the model performance indicator of the target model, and the model configuration monitoring result does not match the configuration parameter applicable to the target model.

In an implementation, a model performance indicator of the target model includes one or more of the following: an intermediate indicator, and a system performance indicator;
a configuration parameter applicable to the target model includes one or more of the following: an application scenario of a model, an effective area of a model, and a processing parameter of a model.

In a possible implementation, the intermediate indicator includes one or more of the following:
model accuracy;
variation in model accuracy;
cosine similarity;
variation in cosine similarity;
a measurement result of a model input and/or a measurement result of a model output;
output gain;
variation in output gain; and
reference signal overhead reduction.

In a possible implementation, the system performance indicator includes one or more of the following:
throughput;
latency;
an error rate;
model accuracy; and
variation in model accuracy.

In a second aspect, the present application provides a model updating method, including:
sending a parameter of a target model or sending model indication information, where the parameter of the target model is used for determining whether to perform a model updating process of the target model, and the model indication information is used for determining the parameter of the target model;
the model indication information is one or more of the following:
   information for indicating a model;
   information for indicating a use case;
   information for indicating a function;
   a model performance indicator of a model;
   a configuration parameter applicable to a model; and
   a monitoring objective corresponding to a model.

In a possible implementation, the parameter of the target model includes a performance configuration parameter and/or a monitoring objective;
the performance configuration parameter includes one or more of the following information: a model performance indicator of the target model, and a configuration parameter applicable to the target model;
the monitoring objective is any one of the following:
   performance;
   configuration; and
   performance and configuration.

In a possible implementation, a model performance indicator of the target model includes one or more of the following: an intermediate indicator, and a system performance indicator;
a configuration parameter applicable to the target model includes one or more of the following: an application scenario of a model, an effective region of a model, and a processing parameter of a model.

In a possible implementation, the intermediate indicator includes one or more of the following:
model accuracy;
variation in model accuracy;
cosine similarity;
variation in cosine similarity;
a measurement result of a model input and/or a model output;
output gain;
variation in output gain; and
reference signal overhead reduction.

In a possible implementation, the system performance indicator includes one or more of the following:
throughput;
latency;
an error rate;
model accuracy; and
variation in model accuracy.

In a third aspect, the present application provides a model updating apparatus, including:
an obtaining module, configured to obtain a parameter of a target model; and
a determining module, configured to determine, based on the parameter of the target model, whether to perform a model updating process of the target model.

In a possible implementation, the parameter of the target model includes a performance configuration parameter and/or a monitoring objective;
the performance configuration parameter includes one or more of the following information: a model performance indicator of the target model, and a configuration parameter applicable to the target model;
the monitoring objective is any one of the following:
   performance;
   configuration; and
   performance and configuration.

In a possible implementation, the obtaining module is specifically configured to:
obtain model indication information; and
determine, based on the model indication information, the parameter of the target model;
the model indication information is one or more of the following:
   information for indicating a model;
   information for indicating a use case;
   information for indicating a function;
   a model performance indicator of a model;
   a configuration parameter applicable to a model; and
   a monitoring objective corresponding to a model.

In a possible implementation, the determining module is specifically configured to:
determine a monitoring result of the target model, where the monitoring result is used for representing performance and/or configuration of the target model;
the determining module is specifically configured to:
   determine, based on the monitoring result and the parameter of the target model, whether to perform the model updating process of the target model.

In a possible implementation, the obtaining module is specifically configured to:
obtain an update condition;
the determining module is specifically configured to:
   determine, based on the performance configuration parameter, the monitoring result, and the update condition, whether to perform the model updating process of the target model.

In a possible implementation, the determining module is specifically configured to:
obtain an update condition based on the monitoring objective;
determine, based on the performance configuration parameter, the monitoring result, and the update condition, whether to perform the model updating process of the target model.

In a possible implementation, the determining module is specifically configured to:
when the monitoring result and the performance configuration parameter satisfy the update condition, determine to perform the model updating process of the target model.

In a possible implementation, when the monitoring result includes a model performance monitoring result, the update condition is that the model performance monitoring result does not match the model performance indicator of the target model;
when the monitoring result includes a model configuration monitoring result, the update condition is that the model configuration monitoring result does not match the configuration parameter applicable to the target model; and
when the monitoring result includes both a model performance monitoring result and a model configuration monitoring result, the update condition is: the model performance monitoring result does not match the model performance indicator of the target model, and the model configuration monitoring result does not match the configuration parameter applicable to the target model.

In a possible implementation, a model performance indicator of the target model includes one or more of the following: an intermediate indicator, and a system performance indicator;
a configuration parameter applicable to the target model includes one or more of the following: an application scenario of a model, an effective area of a model, and a processing parameter of a model.

In a possible implementation, the intermediate indicator includes one or more of the following:
model accuracy;
variation in model accuracy;
cosine similarity;
variation in cosine similarity;
a measurement result of a model input and/or a model output;
output gain;
variation in output gain; and
reference signal overhead reduction.

In a possible implementation, the system performance indicator includes one or more of the following:
throughput;
latency;
an error rate;
model accuracy; and
variation in model accuracy.

In a fourth aspect, the present application provides a model updating apparatus, including:
a sending module, configured to send a parameter of a target model or send model indication information, where the parameter of the target model is used for determining whether to perform a model updating process of the target model, and the model indication information is used for determining the parameter of the target model;
the model indication information is one or more of the following:
   information for indicating a model;
   information for indicating a use case;
   information for indicating a function;
   a model performance indicator of a model;
   a configuration parameter applicable to a model; and
   a monitoring objective corresponding to a model.

In a possible implementation, the parameter of the target model includes a performance configuration parameter and/or a monitoring objective;
the performance configuration parameter includes one or more of the following information: a model performance indicator of the target model, and a configuration parameter applicable to the target model;
the monitoring objective is any one of the following:
   performance;
   configuration; and
   performance and configuration.

In a possible implementation,
a model performance indicator of the target model includes one or more of the following: an intermediate indicator, and a system performance indicator;
a configuration parameter applicable to the target model includes one or more of the following: an application scenario of a model, an effective area of a model, and a processing parameter of a model.

In a possible implementation, the intermediate indicator includes one or more of the following:
model accuracy;
variation in model accuracy;
cosine similarity;
variation in cosine similarity;
a measurement result of a model input and/or a model output;
output gain;
variation in output gain; and
reference signal overhead reduction.

In a possible implementation, the system performance indicator includes one or more of the following:
throughput;
latency;
an error rate;
model accuracy; and
variation in model accuracy.

In a fifth aspect, the present application provides an electronic device, including: a processor, and a memory in communication connection with the processor; where,
the memory stores a computer executable instruction; and
the processor executes the computer executable instruction stored in the memory to implement the model updating method according to the first aspect.

In a sixth aspect, the present application provides an electronic device, including: a processor, and a memory in communication connection with the processor; where,
the memory stores a computer executable instruction; and
the processor executes the computer executable instruction stored in the memory to implement the model updating method according to the second aspect.

In a seventh aspect, the present application provides a computer readable storage medium, storing thereon a computer executable instruction, where when the computer executable instruction is run by a computer, the model updating method according to the first aspect or the second aspect is implemented.

In an eighth aspect, the present application provides a computer program product, including a computer program, where when the computer program is run by a computer, the model updating method according to the first aspect or the second aspect is implemented.

In a ninth aspect, the present application provides a chip, storing thereon a computer program, where when the computer program is executed by the chip, the model updating method according to the first aspect or the second aspect is implemented.

In a possible implementation, the chip is a chip in a chip module.

In a tenth aspect, the present application provides a modular device including a power module, a storage module, and a chip module;
where the power module is configured to supply electric energy for the modular device;
the storage module is configured to store data and an instruction;
the chip module is configured to perform the model updating method described in the first aspect or the second aspect.

According to the model updating method and apparatus, the device, and the storage medium provided in the present application, a terminal device can obtain a parameter of a target model; and then determines, based on the parameter, whether to perform a model updating process of the target model. The present application provides a solution for determining whether to perform a model update.

### BRIEF DESCRIPTION OF DRAWINGS

FIG. 1 is a schematic diagram of a scenario to which the present application is applicable to.
FIG. 2 is a schematic flowchart of a model updating method according to a first embodiment of the present application.
FIG. 3 is another schematic flowchart of a model updating method according to a second embodiment of the present application.
FIG. 4 is yet another schematic flowchart of a model updating method according to a third embodiment of the present application.
FIG. 5 is still another schematic flowchart of a model updating method according to a fourth embodiment of the present application.
FIG. 6 is a schematic structural diagram of a model updating apparatus according to a fifth embodiment of the present application.
FIG. 7 is a schematic structural diagram of a model updating apparatus according to a sixth embodiment of the present application.
FIG. 8 is a schematic structural diagram of an electronic device according to a seventh embodiment of the present application.

### DESCRIPTION OF EMBODIMENTS

The technical solutions according to the embodiments of the present application may be applied to various communication systems, such as: a Long Term Evolution (Long Term Evolution, LTE) system, an LTE Frequency Division Duplex (Frequency Division Duplex, FDD) system, an LTE Time Division Duplex (Time Division Duplex, TDD) system, a Universal Mobile Telecommunication System (Universal Mobile Telecommunication System, UMTS), a Worldwide Interoperability for Microwave Access (Worldwide Interoperability for Microwave Access, WiMAX) communication system, the 5th-generation communication technology (5th-generation, 5G) mobile communication system or New Radio Access Technology (New Radio Access Technology, NR). The 5G mobile communication system can include a Non-Standalone (Non-Standalone, NSA) 5G mobile communication system and/or a Standalone (Standalone, SA) 5G mobile communication system.

The technical solutions provided in the embodiments of the present application can further be applied to future communication systems, such as a 6th generation mobile communication system, a 7th generation mobile communication system, etc. It is not limited in the present application in this regard.

The technical solutions provided in the present application can further be applicable to Machine Type Communication (Machine Type Communication, MTC), Long Term Evolution-Machine (Long Term Evolution-Machine, LTE-M), Device-to-Device (Device-to-Device, D2D) networks, Machine-to-Machine (Machine-to-Machine, M2M) networks, Internet of Things (Internet of Things, IoT) networks, or other networks. An IoT network may, for example, include the Internet of Vehicles. In the Internet of Vehicles, the communication methods are collectively referred to as Vehicle to other devices (Vehicle to X, V2X, where X can represent anything). For example, V2X may include: Vehicle to Vehicle (Vehicle to Vehicle, V2V) communication, Vehicle to Infrastructure (Vehicle to Infrastructure, V2I) communication, Vehicle to Pedestrian (Vehicle to Pedestrian, V2P) communication, or Vehicle to Network (Vehicle to Network, V2N) communication, etc.

For models deployed on a terminal device (for example, AI models, ML models, or other models), to ensure the performance of the terminal device, it is necessary for the terminal device to use suitable models. Therefore, model monitoring can be implemented to determine whether to perform an update to the model on the terminal device, thereby ensuring that the terminal device uses suitable model.

In a possible implementation of the present application, model updates on a terminal device side can be roughly classified into the following three categories:
(1) The terminal device monitors a model and independently completes a model update;
(2) The terminal device monitors the model and sends a monitoring result to a network device, enabling the network device can assist the terminal device in completing the model update; and
(3) The network device monitors the model deployed on the terminal device and instructs the terminal device to complete the model update.

The monitoring of the model by either the terminal device or the network device generally refers to monitoring with respect to model performance or monitoring with respect to related model configuration, subsequently, based on a model performance monitoring result or a model configuration monitoring result, a decision is made on whether to perform a model updating process.

In a possible implementation, a decision of whether to perform the model updating process is made based on a model performance monitoring result. For example, when the model performance monitoring result does not match a preset condition, it may be determined to perform the model updating process. However, due to a generalization capability of the model, the model may still be capable of providing normal services even under such circumstance, and disruption to a user service may be incurred if the model updating process is performed, that is, an unnecessary model update is performed, in which case, model updates are frequently triggered.

According to a model updating method provided in the present application, a terminal device can obtain a parameter of a target model; and then determines, based on the parameter of the target model, whether to perform a model updating process of the target model. The present application provides a solution for determining whether to perform a model update.

It should be noted that in the embodiments of the present application, model update is defined in a broad sense. The model update involved in the present application includes, but not limited to: model switching (model switching), model update (model update), model selection (model selection), a fallback operation (fallback operation), model activation (model activation), model deactivation (model deactivation), etc.

The model update (model update) includes an adjustment to model structure or an adjustment to a model parameter (a weight, a bias parameter, etc.). The model structure includes, but not limited to: a Convolutional Neural Network (Convolutional Neural Network, CNN), a Deep Neural Network (Deep Neural Network, DNN), a Transformer, a Long Short-Term Memory Neural Network (Long Short-Term Memory, LSTM), etc.

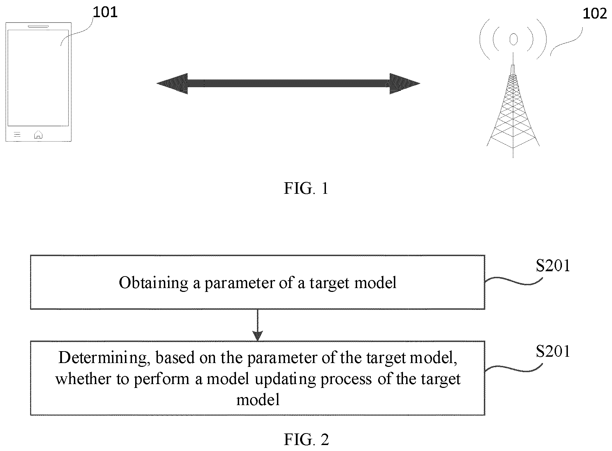

For ease of understanding, with reference to the example in FIG. 1, the following will describe an application scenario to which the embodiments of the present application is applicable to.

As an example, FIG. 1 is a schematic diagram of a scenario to which the present application is applicable to. With reference to FIG. 1, containing a terminal device 101 and a network device 102. The network device 102 can send a parameter of a target model, and the terminal device 101 can receive the parameter of the target model, and determine whether to perform a model updating process of the target model.

It should be understood that there can be multiple terminal devices 101 and network devices 102, which are not shown in the figure.

In the embodiments of the present application, the network device can be any device with a wireless transceiving function. This device includes, but not limited to: an Evolved Node B (Evolved Node B, eNB), a Radio Network Controller (Radio Network Controller, RNC), a Node B (Node B, NB), a Base Station Controller (Base Station Controller, BSC), a Base Transceiver Station (Base Transceiver Station, BTS), a home base station (for example, Home Evolved NodeB, or Home Node B (HNB)), a Baseband Unit (Baseband Unit, BBU), an Access Point (Access Point, AP) in a Wireless Fidelity (Wireless Fidelity, WiFi) system, a wireless relay node, a wireless backhaul node, a Transmission Point (Transmission Point, TP), or a Transmission and Reception Point (Transmission and Reception Point, TRP), etc. It can also be a next-generation base station (Next Generation Node B, gNB) or a Transmission Point (TRP or TP) in a 5G (such as NR) system, one or a group (including multiple antenna panels) of antenna panels of a base station in a 5G system, or a network node constituting a gNB or Transmission Point, such as a Baseband Unit (BBU) or a Distributed Unit (DU), etc.

In some deployments, a gNB may include a Centralized Unit (CU) and a DU. The gNB may further include an Active Antenna Unit (Active Antenna Unit, AAU). The CU implements a portion of the gNB's functions, and the DU implements another portion of the gNB's functions. For example, the CU is responsible for processing non-real-time protocols and services, implementing functions of a Radio Resource Control (Radio Resource Control, RRC) layer and a Packet Data Convergence Protocol (Packet Data Convergence Protocol, PDCP) layer. The DU is responsible for processing physical layer protocols and real-time services, implementing functions of a Radio Link Control (Radio Link Control, RLC) layer, a Medium Access Control (Medium Access Control, MAC) layer, and a Physical (Physical, PHY) layer. The AAU implements a portion of the physical layer processing functions, radio frequency processing, and related functions of active antennas. Since information of the RRC layer ultimately becomes information of the PHY layer or is derived from information of the PHY layer, in this architecture, higher-layer signaling, such as RRC layer signaling, can also be considered to be sent by the DU or by the DU+AAU. It should be understood that the network device can be a device that includes one or more of a CU node, a DU node, and an AAU node. Additionally, the CU can be considered as a network device in a Radio Access Network (Radio Access Network, RAN) or a network device in a Core Network (Core Network, CN), which is not limited in the present application.

The network device provides services for a cell, a terminal device communicates with the cell on a transmission resource (for example, a frequency domain resource, or in other words, a frequency spectrum resource) allocated by the network device. The cell may belong to a macro base station (for example, a macro eNB or a macro gNB, etc.), or belong to a base station corresponding to a small cell. The small cell here may include: a Metro Cell (Metro Cell), a Micro Cell (Micro Cell), a Pico Cell (Pico Cell), a Femto Cell (Femto Cell), etc. These small cells are featured with small coverage area and low transmission power, and are suitable for providing high-speed data transmission services.

In the embodiments of the present application, the terminal device may also be referred to as a user equipment (user equipment, UE), an access terminal device, a user unit, a user station, a mobile station, a mobile platform, a remote station, a remote terminal, a mobile device, a user terminal, a terminal, a wireless communication device, a user proxy or a user apparatus.

The terminal device can be a device that provides voice/data connectivity to a user, for example, a handheld device or a vehicle mounted device with a wireless connectivity function. Currently, some example for the terminal device may include: a Mobile Phone (Mobile Phone), a Pad (Pad), a computer with wireless transceiver capabilities (such as a laptop computer, a palmtop computer, etc.), a Mobile Internet Devices (Mobile Internet Device, MID), a Virtual Reality (Virtual Reality, VR) device, an Augmented Reality (Augmented Reality, AR) device, an Extended Reality (Extended Reality, XR) device, a wireless terminal in industrial control (industrial control), a wireless terminal in Self Driving (Self Driving), a wireless terminal in Remote Medical (Remote Medical), a wireless terminal in Smart Grid (Smart Grid), a wireless terminal in Transportation Safety (Transportation Safety), a wireless terminal in Smart City (Smart City), a wireless terminal in Smart Home (Smart Home), a cellular phone, a cordless phone, a Session Initiation Protocol (Session Initiation Protocol, SIP) phone, a Wireless Local Loop (Wireless Local Loop, WLL) station, a Personal Digital Assistant (Personal Digital Assistant, PDA), a handheld device or a computing device with wireless communication capabilities, or other processing devices connected to a wireless modem, a vehicle mounted device, a wearable device, a terminal device in a 5G network, or a terminal device in a future evolved Public Land Mobile Network (Public Land Mobile Network, PLMN), etc.

The wearable device, which may also be referred to as a wearable smart device, is a generic term for wearable devices such as glasses, gloves, watches, clothes and adornments, and shoes, which are developed from wearable items in daily life by intelligent design with wearable technologies. The wearable device is namely a portable device which is directly wearable or integrated into clothes or adornments of a user. A wearable device is not only just a kind of hardware device, but more of powerful functionalities implemented with software supports, dada exchanging, and interactions with a cloud. A wearable device in a broad sense may include, for example, a smart watch, smart glasses or the like, which have full functionality and large size and perform complete or partial functionality independently from a smart phone, and may also include, for example, smart bracelets of various types, smart jewelries or the like for physical signs monitoring, which focus on a certain type of application function and need to be used in cooperation with other devices, such as a smart phone.

In addition, the terminal device may also be a terminal device in an IoT system. IoT is an important component in the future development of information technologies, and its main technical characteristic is to connect items to a network through communication technologies, thereby realizing an intelligent network with human-machine interconnection and thing-to-thing interconnection. IoT technology can achieve massive connections, deep coverage, and power savings through, for example, Narrow Band (Narrow Band, NB) technology.

The technical solutions of the present application and how they solve the aforementioned technical problem will be described in detail hereunder through specific embodiments. The following specific embodiments can exist independently, or combined with each other. For the same or similar concepts or processes, description may not be repeated in some embodiments. The embodiments of the present application will be described as follows in conjunction with the accompanying drawings.

FIG. 2 is a schematic flowchart of a model updating method according to a first embodiment of the present application. The method can be performed by a terminal device or by a model updating apparatus provided in the terminal device. The apparatus can be a chip, a chip module, an integrated development environment (integrated development environment, IDE), or the like. With reference to FIG. 2, the method includes the following steps.

S201, obtaining a parameter of a target model.

The target model in the present application refers to a certain model or some models in a terminal device, and does not represent a specific model. For example, if the terminal device is provided with Model 1, Model 2, and Model 3, the target model may be Model 1 or Model 2, or it may be Model 3. It may also be Model 1 and Model 2, or Model 2 and Model 3. Any model in the target model can be an AI model, an ML model, or other models, which is not limited.

The parameter of the target model is used for determining whether to perform model update for the target model.

Optionally, the parameter of the target model includes a performance configuration parameter and/or a monitoring objective. The performance configuration parameter refers to a parameter related to the performance and/or configuration of a model, and the monitoring objective is used for indicating an aspect to focus on when monitoring the model.

Optionally, the performance configuration parameter includes one or more of the following information: a model performance indicator of the target model, and a configuration parameter applicable to the target model;

Optionally, the monitoring objective is any one of the following: performance, configuration, and performance and configuration.

The terminal device can obtain the parameter of the target model through any one of Manner 1 to Manner 4 as follows.

### Manner 1

In Manner 1, the terminal device can obtain the parameter of the target model locally. In this case, the parameter of the target model can be preset, for example, specified in a protocol. As an example, if the target model is Model 1, the terminal device can obtain a parameter of Model 1 locally.

### Manner 2

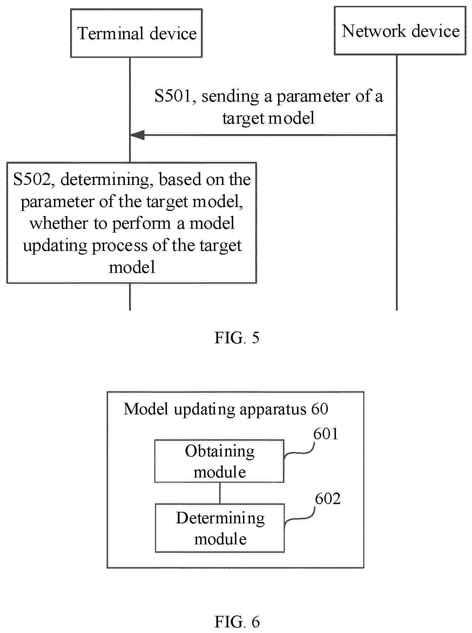

In Manner 2, the terminal device can obtain the parameter of the target model from another device. For example, as described in S501 in the embodiment as shown in FIG. 5, the network device can send the parameter of the target model, and the terminal device can receive the parameter of the target model sent by the network device. As an example, if the target model is Model 1, the network device can send the parameter of Model 1 to the terminal device, and the terminal device receives the parameter of Model 1.

### Manner 3

In Manner 3, the terminal device obtains information (for example, model indication information as described hereunder) used for determining the parameter of the target model, and determines the parameter of the target model based on the information used for determining the parameter of the target model.

In Manner 3, the terminal device can obtain, locally, the information used for determining the parameter of the target model (for example, model indication information as described hereunder). In this case, the information used for determining the parameter of the target model can be preset, for example, specified in a protocol or pre-configured in the terminal device.

In Manner 3, the terminal device can also obtain the information (for example, model indication information as described hereunder) used for determining the parameter of the target model from another device. For example, the network device can send the model indication information, and the terminal device can receive the model indication information.

For descriptions related to the model indication information in Manner 3, reference can be made to the following descriptions.

In Manner 3, the terminal device can obtain one or more parameters in the parameter of the target model based on the model indication information. For example, based on Table 1 below, if the target model is Model 1, the terminal device can determine, based on the model indication information, that the performance configuration parameters in the parameters of the target model include Model Performance Indicator 1 and Configuration Parameter 1; and based on Table 2 and Table 3 below, if the target model is Model 3, the terminal device can determine, based on the model indication information, that the performance configuration parameters in the parameters of the target model include Model Performance Indicator 3 and Configuration Parameter 3.

### Manner 4

In Manner 4, the terminal device can obtain part of parameters of the target model locally and obtain other parameters from another device. Alternatively, the terminal device can obtain part of parameters of the target model based on the model indication information and obtain other parameters locally or from another device.

In Manner 4, it should be noted that, with respect to information included in the model indication information and belonging to the parameters of the target model, the terminal device can obtain based on the model indication information; with respect to information not included in the model indication information and belonging to the parameters of the target model, the terminal device can obtain through other means, including but not limited to obtaining locally or from another device. For example, based on Table 1 below, if the target model is Model 1, the terminal device can determine, based on the model indication information, that the performance configuration parameters in the parameters of the target model include Model Performance indicator 1 and Configuration Parameter 1, and the monitoring objective in the parameters of the target model can be preset in the terminal device, in such case, the terminal device can obtain the monitoring objective locally. It should be noted that, in the terminal device, a monitoring objective can be set for each target model or for each group of target models (i.e., multiple target models), or a monitoring objective can be configured for all models, which is not limited.

In Manner 4, as an example, if the target model is Model 1, the network device can send some parameters of Model 1 to the terminal device, and the terminal device receives such parameter of Model 1, and for other parameters of the target model, the terminal device can obtain locally.

S202, determining, based on the parameter of the target model, whether to perform a model updating process of the target model.

Optionally, the aforementioned model indication information is one or more of the following:
(1) information for indicating a model;
(2) information for indicating a use case;
(3) information for indicating a function;
(4) a model performance indicator of a model;
(5) a configuration parameter applicable to a model; and
(6) a monitoring objective corresponding to a model.

The following provides a detailed explanation of each piece of information that may be included in the model indication information.

### (1) Information for indicating a model

The information for indicating a model may include at least one model identifier, where each model identifier is used to directly indicate one model. It should be understood that if a certain model (e.g., Model 1) exists in multiple use cases (Use Case), then the model identifier can correspond to Model 1 in the multiple use cases.

### (2) Information for indicating a use case

The information for indicating a use case may include at least one use case identifier, where each use case identifier is used for indicating one use case, or all models under the use case as well. Optionally, the terminal device and the network device can agree on the model under a use case, such that the terminal device can determine all models under the use case based on the use case identifier.

### (3) Information for indicating a function

The information for indicating a function may include at least one function identifier, where each function identifier is used for indicating one function, or all models under the function as well. The function here refers to a function of a model. That is, the terminal device and the network device can agree on the model under a function, such that the terminal device can determine all models under the function based on the function identifier.

### (4) Model performance indicator of a model

The model performance indicator of a model is used for indicating a performance requirement that the model needs to satisfy.

### (5) Configuration parameter applicable to a model

The configuration parameter applicable to a model is used for indicating a configuration requirement that the model needs to satisfy (or a minimum configuration requirement).

### (6) Monitoring objective corresponding to a model

The monitoring objectives corresponding to different models may be the same, or different, which is not limited in the present application.

The aforementioned information (1) to (3) are all intended to indicate one or more models.

In a practical implementation, the information included in the model indication information, as an example, may be any one of the following.

A first type: including information (1) as well as any one or more of information (4), information (5), and information (6).

The contents indicated by any two pieces of information among information (1), information (4), information (5), and information (6) may have a one-to-one correspondence, or a many-to-one or one-to-many correspondence, which is not limited in the present application.

As an example, when the model indication information includes information (1), information (4), and information (5), an example for the information included in one type of model indication information can be referred to in Table 1 below.

**Table 1**

| Model identifier | Model performance indicator of a model | Configuration parameter applicable to a model |
|---|---|---|
| Identifier of Model 1 | Model performance indicator 1 | Configuration parameter 1 |
| Identifier of Model 2 | | |
| Identifier of Model 3 | Model performance | Configuration parameter 3 |
| | indicator 3 | |
| Identifier of Model 4 | Model performance indicator 4 | Configuration parameter 4 |

A second type: including information (2) as well as any one or more of information (4), information (5), and information (6).

The contents indicated by any two pieces of information among information (2), information (4), information (5), and information (6) may have a one-to-one correspondence, or a many-to-one correspondence, which is not limited in the present application.

As an example, when the model indication information includes information (2), information (4), and information (5), an example for the information included in one type of model indication information can be referred to in Table 2 below.

**Table 2**

| Use case identifier | Model performance indicator of a model | Configuration parameter applicable to a model |
|---|---|---|
| Identifier of use case 1 | Model performance indicator 1 | Configuration parameter 1 |
| Identifier of use case 3 | Model performance indicator 3 | Configuration parameter 3 |

Based on the example shown in Table 2, if all models under Use Case 1 include Model 1 and Model 2, and all models under Use Case 3 include Model 3 and Model 4, then Table 2 implicitly indicates the information shown in Table 3.

**Table 3**

| Use case identifier | All models under a use case | Model performance indicator of a model | Configuration parameter applicable to a model |
|---|---|---|---|
| Identifier of | Model 1 | Model performance | Configuration |
| use case 1 | Model 2 | indicator 1 | parameter 1 |
| Identifier of use case 3 | Model 3 | Model performance indicator 3 | Configuration parameter 3 |
| | Model 4 | | |

A third type: including information (3) as well as any one or more of information (4), information (5), and information (6).

The contents indicated by any two pieces of information among information (3), information (4), information (5), and information (6) may have a one-to-one correspondence, or a many-to-one correspondence, which is not limited in the present application.

An example for the third type of model indication information can be found in Table 2 and Table 3, which can be understood by replacing "use case" with "function" in the tables.

A fourth type: including information (1) and information (2), as well as any one or more of information (4), information (5), and information (6).

The use case indicated by information (2) can contain one or more models indicated by information (1), where the contents indicated by any two pieces of information among information (1), information (4), information (5), and information (6) may have a one-to-one correspondence, or a many-to-one or one-to-many correspondence, which is not limited in the present application.

As an example, if all models under Use Case 1 include Model 1 and Model 2, all models under Use Case 3 include Model 3 and Model 4, and all models under Use Case 5 include Model 5 and Model 6, an example for the fourth type of model indication information can be found in Table 4.

**Table 4**

| Use case identifier | Model identifier | Model performance indicator of a model | Configuration parameter applicable to a model |
|---|---|---|---|
| Identifier of | Identifier of Model 1 | Model performance | Configuration |
| use case 1 | Identifier of Model 2 | indicator 1 | parameter 1 |
| Identifier of use case 3 | Identifier of Model 3 | Model performance indicator 3 | Configuration parameter 3 |
| | Identifier of Model 4 | | |
| Identifier of use case 5 | Identifier of Model 5 | Model performance indicator 5 | Configuration parameter 5 |
| | Identifier of Model 6 | Model performance indicator 6 | Configuration parameter 6 |

A fifth type: including information (1) and information (3), as well as any one or more of information (4), information (5), and information (6).

The function indicated by information (3) can contain one or more models indicated by information (1), where the contents indicated by any two pieces of information among information (1), information (4), information (5), and information (6) may have a one-to-one correspondence, or a many-to-one or one-to-many correspondence, which is not limited in the present application.

An example for the fifth type of model indication information can be found in Table 4, which can be understood by replacing "use case" with "function" in the table.

The aforementioned five types are merely examples for model indication information. In a practical implementation, the information contained in the model indication information may also include other cases beyond the aforementioned five types, which is not limited.

Optionally, a model performance indicator of the target model includes an intermediate indicator and/or a system performance indicator.

The intermediate indicator may include one or more of the following information:
(7) model accuracy;
(8) variation in model accuracy;
(9) cosine similarity;
(10) variation in cosine similarity;
(11) a measurement result of a model input and/or a measurement result of a model output;
(12) output gain;
(13) variation in output gain; and
(14) reference signal overhead reduction (Reference Signal Overhead Reduction).

The following provides a detailed explanation of each piece of information that may be included in the intermediate indicator.

### (7) Model accuracy

The model accuracy is used for representing the degree of accuracy of a model. The model accuracy can be an instantaneous/momentary value, an average value, etc.

The model accuracy can be the accuracy at a specific time instant, or can be the accuracy in a certain time period or a certain time window.

The model accuracy can be an average, maximum, or minimum value among multiple determined accuracy values. Alternatively, it can be an accuracy value determined based on a performance threshold (for example, a ratio of the number of detections exceeding the performance threshold to the total number of detections within a certain time period), or the like.

As an example, the accuracy of a model can be positioning accuracy.

### (8) Variation in model accuracy

As an example, the variation in model accuracy can be a difference or gradient value between two consecutive model accuracy values, or a difference or gradient value between a highest and lowest model accuracy values in a unit time. Other forms of the variation in model accuracy are not limited in the present application.

As an example, the variation in model accuracy can be variation in positioning accuracy.

It should be noted that both the model accuracy and the variation in model accuracy can have multiple definitions (i.e., be determined in various ways), which is not limited in the present application.

### (9) Cosine similarity

The cosine similarity can be cosine similarity between a model output and an output result (or other labeled values) of a conventional communication method used to achieve a same function. The cosine similarity can be used to represent model performance.

### (10) Variation in cosine similarity

The variation in cosine similarity can be a difference or gradient value between two consecutive cosine similarity values, or a difference or gradient value between a highest and lowest cosine similarity values in a unit time. Other forms of the variation in cosine similarity are not limited in the present application.

### (11) Measurement result of a model input and/or measurement result of a model output

The measurement result of a model input can be considered as a measurement or analysis result of model input. As an example, the measurement result of a model input can indicate a match or mismatch. For example, whether there is a match can be determined based on statistical distribution of model input data and preset statistical distribution characteristics. If the model input does not conform to a normal distribution, or there is a deviation between the mean or variance of the model input and preset mean or variance of the model inputs, or the deviation exceeds a threshold, or a dimension, type, data processing method, sampling length, etc., of the model input does not conform to pre-configured characteristics of the model input, then the measurement result of the model input can be determined as a mismatch. The definition of the measurement result of a model output is similar, which can be understood by replacing "input" with "output" in the above description.

### (12) Output gain

The output gain refers to output gain of a model.

### (13) Variation in output gain

The variation in output gain refers to variation in output gain of a model. As an example, the variation in output gain can be a difference or gradient value between two consecutive output gain values, or a difference or gradient value between a highest and lowest output gain values in a unit time. Other forms of the variation in output gain are not limited in the present application.

### (14) Reference signal overhead reduction

The reference signal overhead reduction can be used to evaluate the performance of an AI model in AI-enabled beam management. The reference signal overhead reduction can be obtained by a determination based on a prediction result of a model.

The system performance indicator includes one or more of the following:
(15) throughput;
(16) latency;
(17) an error rate;
(18) Model accuracy; and
(19) variation in model accuracy.

The following provides a detailed explanation of each piece of information that may be included in the system performance indicator.

### (15) Throughput

The throughput refers to an amount of data packets transmitted and/or received by the terminal device in a unit time.

Taking downlink data transmission as an example, the throughput refers to an amount of data packets received or successfully received by the terminal device in a unit time, or an amount of data packets sent or successfully sent by the network device or a server in a unit time, where the measurement of unit time and the amount of data packets can occur at the application layer, PDCP layer, RLC layer, MAC layer, PHY layer, etc., which is not limited in the present application.

As an example, the throughput here can be a specific lower limit value.

### (16) Latency

The latency refers to a time duration taken from a data packet being sent to being acknowledged as received. A latency measurement can be an end-to-end latency, i.e., from the application layer of a sending terminal to the application layer of a receiving terminal. Or, a latency measurement can be an air interface latency, taking downlink as an example, the latency can be a time taken from data being sent from the PDCP layer of a network device to being acknowledged as received at the PDCP layer of a terminal device. The measurement location and definition of latency is not limited in the present application.

As an example, the latency can also be used for indicating a jitter value, i.e., variation in latency. The jitter value can be a difference between a lowest and highest latency in a unit time, or a difference between a latency of each data packet relative to an average latency, or other definitions for a jitter, which is not limited in the present application.

As an example, the latency here can be a specific upper limit value.

### (17) Error rate

The error rate can be, for example, a packet loss rate, a code error rate, a bit error rate, a block error rate, a byte error rate, etc. The packet loss rate can be considered as a packet loss rate of a network (for example, Ethernet or an air interface), which refers to a proportion of lost data packets to total transmitted data packets. The packet loss rate can reflect the performance of a model. For example, a decrease in model performance will lead to an increase in the packet loss rate, thereby affecting user experience. The symbol error rate refers to a proportion of incorrectly received codewords to total transmitted codewords. The bit error rate refers to a proportion of incorrectly received bits to total transmitted bits. The block error rate refers to a proportion of incorrectly received blocks to total transmitted blocks. The byte error rate refers to a proportion of incorrectly received bytes to total transmitted bytes.

As an example, the error rate here can be a specific upper limit value.

### (18) Model accuracy

As an example, the model accuracy here can be a specific lower limit value. For other descriptions to the model accuracy, reference can be made to the above, which will not be repeated here. It should be noted that when the model accuracy is included in the system performance indicator, it can also be referred to as accuracy.

### (19) Variation in model accuracy

As an example, the variation in model accuracy here can be a specific lower limit value. For other descriptions to the variation in model accuracy, reference can be made to the above, which will not be repeated here. It should be noted that when the variation in model accuracy is included in the system performance indicator, it can also be referred to as variation in accuracy.

It should be understood that the aforementioned upper or lower limit values can also be a range, which is not limited here.

Optionally, a configuration parameter applicable to the target model includes one or more of the following: an application scenario of a model, an effective area of a model, a processing parameter of a model.

The application scenario of a model may include one or more of the following:
urban (urban), non-urban (for example, rural), high-speed mobility, medium-speed mobility, low-speed mobility, uniform-speed mobility, stationary, a base station height, a terminal device height, a preset inter-site distance (Inter-Site Distance, ISD), a terminal device moving speed, terminal device distribution, etc.

The application scenario of a model refers to a scenario in which the model is applicable. When the application scenario includes the urban, it means the model is applicable to an urban scenario. When the application scenario includes the non-urban, it means the model applicable to a non-urban scenario. When the application scenarios of a model include "others", the understanding can be referenced accordingly, and details are not repeated here.

High-speed mobility, low-speed mobility, uniform-speed mobility, and stationary refer to a movement status of a terminal device. A moving speed of a terminal device, when being greater than a first threshold, is considered as high-speed mobility; when being less than or equal to the first threshold and greater than or equal to a second threshold, is considered as medium-speed mobility; and when being lower than the second threshold, is considered as low-speed mobility. When the moving speed of a terminal device is 0 km/h, it is considered as stationary. It should be noted that the definitions of high-speed mobility, medium-speed mobility, and low-speed mobility here are merely exemplary, which is not limited in the present application. The first threshold and/or the second threshold can be preset (for example, specified in a protocol), or indicated by a network device, or negotiated between a terminal device and a network device, which is not limited in the present application.

The base station height can be a specific value or a height range. The terminal device height can be a specific value or a height range. The preset inter-site distance can be considered as a distance between a base station and another, for example, the inter-site distance can be 200m (meter) or 500m, etc. The moving speed of a terminal device can be a specific value (for example, 3km/h (kilometers/hour), 30km/h, 60km/h), or a speed range.

The terminal device distribution can refer to a number of terminal devices in a certain range, or density distribution characteristics of terminal devices in a certain range (for example, dense in the center and sparse at the edges, or uniformly distributed). It can also be represented by the distribution of outdoor terminal devices and the distribution of indoor terminal devices, for example, the proportions of the distribution of outdoor terminal devices and the distribution of indoor terminal devices can respectively be, for example, 100%/0% or 20%/80%, etc.

Optionally, the effective area of a model may include one or more of the following:
a frequency, a Registration Area (Registration Area, RA), a Tracking Area (Tracking Area, TA), a cell, a beam, etc.

The effective area of a model indicates an area where the model is valid. In other words, a model is only valid in its effective area, otherwise, it is invalid.

When the effective area of a model is a frequency, the effective area of a model can refer to a cell corresponding to the frequency. When the effective area of a model is a beam, the effective area of the model can refer to a coverage range of the beam.

As an example, a cell can include an urban macrocell (Uma), a suburban macrocell (Sma), an urban microcell (Umi), etc.

As an example, a beam can include: a terminal device RX beam or a DL TX beam. A UE RX beam can specifically include: a number of UE Rx beams (including the number of panels and a size of antenna array of the terminal device), etc.

As an example, the DL TX beam can specifically include: a DL Tx beam codebook (including various beam (pair) set A and gNB antenna array size).

Optionally, the processing parameter of a model may include one or more of the following:
a model input data processing method (a quantization method, a normalization method, a dequantization method, a denormalization method, etc.), a model output data processing method (a quantization method, a normalization method, a dequantization method, a denormalization method, etc.), data precision (for example, float point (float point) 64/32/16 or integer Int 16/8/4, etc.), model complexity (for example, the number of floating-point operations (floating-point operations, FLOPs), a parameter quantity, a model size, required power consumption, required computational power, etc.), other configurations (for example, antenna ports, bandwidth (i.e., Bandwidth), other configurations of a terminal device side, etc.), model structure (a Convolutional Neural Network (Convolutional Neural Network, CNN), a Deep Neural Network (Deep Neural Network, DNN), a Transformer Transformer, etc.).

The model input data processing method and the model output data processing method can be fixed or flexibly configured, which is not limited in the present application.

Optionally, the method further includes:
(11) determining a monitoring result of the target model, where the monitoring result is used for representing performance and/or configuration of the target model.

In such case, Step 202 can be implemented specifically through Step (12) in a practical implementation:
(12) determining, based on the monitoring result and the parameter of the target model, whether to perform the model updating process of the target model.

In a specific implementation of Step (11), the terminal device can either autonomously monitor the target model to obtain the monitoring result or monitor the target model under the instruction of the network device to obtain the monitoring result, which is not limited in the present application.

Optionally, in a case where the monitoring objective is included in the parameter of the target model, the terminal device can monitor the target model based on the monitoring objective. For example, if the monitoring objective is performance, the performance of the target model can be monitored to obtain a model performance monitoring result. If the monitoring objective is configuration, the configuration of the target model can be monitored to obtain a model configuration monitoring result. If the monitoring objective includes both performance and configuration, both the performance and the configuration of the target model can be monitored to obtain both a model performance monitoring result and a model configuration monitoring result.

Optionally, in a case where the monitoring objective is not included in the parameter of the target model, the terminal device can monitor the target model based on information included in the performance configuration parameter. For example, if the performance configuration parameter includes the model performance indicator of the target model, the performance of the target model can be monitored to obtain a model performance monitoring result. If the performance configuration parameter includes the configuration parameter applicable to the target model, the configuration of the target model can be monitored to obtain a model configuration monitoring result. If the performance configuration parameter includes the model performance indicator and the configuration parameter applicable to the target model, the performance and the configuration of the target model can be monitored to obtain a model performance monitoring result and a model configuration monitoring result.

The model performance monitoring result is used for representing the performance of the target model, and the model configuration monitoring result is used for representing the configuration of the target model.

In a possible implementation, when monitoring the performance and/or configuration of the model, the specific parameters to be monitored can be pre-configured, for example, as specified in a protocol or indicated in advance by the network device.

In another possible implementation, when monitoring the performance of the model, if the performance configuration parameter includes the model performance indicator of the target model, the terminal device can monitor a related parameter in the model performance indicator of the target model to obtain a model performance monitoring result of the target model. The specific indicator to be monitored can be some or all of the intermediate indicators and/or the system performance indicators indicated in the model performance indicators. When monitoring the configuration of the model, if the performance configuration parameter includes the configuration parameter applicable to the target model, a related parameter in the configuration parameter applicable to the target model is monitored to obtain a model configuration monitoring result of the target model. The specific indicator to be monitored can be some or all of the configuration parameter applicable to the target model.

Optionally, a specific implementation of Step (12) includes: determining, based on the performance configuration parameter, the monitoring result, and an update condition, whether to perform the model updating process of the target model.

In a specific implementation, when the monitoring result and the performance configuration parameter satisfy the update condition, it is determined to perform the model updating process of the target model. Otherwise, it is determined not to perform the model updating process of the target model.

In such case, before determining whether to perform the model updating process of the target model, the terminal device can further obtain the update condition. The update condition can be obtained through any one of Case 1 to Case 4 as follows.

### Case 1

The update condition can be preset. For example, it can be Update Condition 1 or Update Condition 2 mentioned hereunder, or both Update Condition 1 and Update Condition 2.

### Case 2

The update condition can be determined based on a monitoring result of the target model.

Optionally, in such case, when the monitoring result of the target model includes the model performance monitoring result, the update condition may include Update Condition 1. That is, when it is determined that the performance of the target model is poor, the model updating process of the target model is performed.

Optionally, in such case, when the monitoring result of the target model includes the model configuration monitoring result, the update condition may include Update Condition 2. That is, when it is determined that the configuration of the target model does not meet an applicable configuration requirement, the model updating process of the target model is performed.

Optionally, in such case, when the monitoring result includes both the model performance monitoring result and the model configuration monitoring result, the update condition may include Update Condition 1 and Update Condition 2. That is, when it is determined that the configuration of the target model does not meet an applicable configuration requirement and the performance is poor, the model updating process of the target model is performed.

### Case 3

The update condition can be determined based on the monitoring objective. For example, if the monitoring objective is the performance, the update condition can be Update Condition 1 mentioned hereunder. If the monitoring objective is the configuration, the update condition can be Update Condition 2 mentioned hereunder. If the monitoring objective includes both the performance and the configuration, the update condition can be both of Update Condition 1 and Update Condition 2 mentioned hereunder.

### Case 4

The update condition can be determined based on a monitoring objective and a monitoring result of the target model.

Optionally, in such case, when the monitoring result of the target model includes the model performance monitoring result, and the monitoring objective is performance, the update condition may include Update Condition 1. That is, when the network device indicates that the monitoring objective is the performance, the terminal device prioritizes the model performance. When the model performance monitoring result satisfies the update condition, the model updating process of the target model is performed.

Optionally, in such case, when the monitoring result of the target model includes the model configuration monitoring result, and the monitoring objective is configuration, the update condition may include Update Condition 2. That is, when the network device indicates that the monitoring objective is the configuration, the terminal device prioritizes the model configuration. When the model configuration monitoring result satisfies the update condition, the model updating process of the target model is performed.

Optionally, in such case, when the monitoring result of the target model includes both the model performance monitoring result and the model configuration monitoring result, and the monitoring objective is performance and configuration, the update condition may include Update Condition 1 and Update Condition 2. That is, when the network device indicates that the monitoring objective is the performance and the configuration, the terminal device needs to consider both of model configuration and model performance. When both of the model configuration monitoring result and the model performance monitoring result satisfy the update condition, the model updating process of the target model is performed.

In the above, Update Condition 1 is that the model performance monitoring result does not match the model performance indicator of the target model. Update Condition 2 is that the model configuration monitoring result does not match the configuration parameter applicable to the target model.

In Update Condition 1, whether the model performance monitoring result matches the model performance indicator of the target model can be divided into several situations as follows.

Situation 1: if the model performance indicator of the target model includes only one of the intermediate indicator and the system performance indicator, when the intermediate indicator or the system performance indicator in the model performance monitoring result matches the intermediate indicator or the system performance indicator in the model performance indicator, it is considered that the model performance monitoring result matches the model performance indicator of the target model.

Situation 2: if the model performance indicator of the target model includes both of the intermediate indicator and the system performance indicator, when both of the intermediate indicator and the system performance indicator in the model performance monitoring result match the intermediate indicator and/or the system performance indicator in the model performance indicator, it is considered that the model performance monitoring result matches the model performance indicator of the target model.

Whether the intermediate indicator in the model performance monitoring result matches the intermediate indicator in the model performance indicator of the target model can be determined through the several manners as follows.

Manner A: if the intermediate indicators in the model performance monitoring result match all intermediate indicators in the model performance indicator of the target model, it is considered that the intermediate indicators in the model performance monitoring result match the intermediate indicators in the model performance indicator of the target model.

Manner B: if the intermediate indicators in the model performance monitoring result match partial indicators of the intermediate indicators in the model performance indicator of the target model, it is considered that the intermediate indicators in the model performance monitoring result match the intermediate indicators in the model performance indicator of the target model. The partial indicators can be certain specific indicators, or the partial indicators can be a certain proportion of the intermediate indicators.

Analogously, the method for determining whether the system performance indicator in the model performance monitoring result matches the system performance indicator in the model performance indicator of the target model is similar, which will not be repeated.

In Update Condition 2, whether the model configuration monitoring result matches the configuration parameter applicable to the target model can be divided into several situations as follows.

Situation 3: if the configuration parameter applicable to the target model includes only one of the application scenario of a model, the effective area of a model, and the processing parameter of a model, when the application scenario of a model in the model configuration monitoring result matches the application scenario applicable to the target model, the area where a model is located in the model configuration monitoring result matches the effective area of the target model, or the processing parameter of a model in the model configuration monitoring result matches the processing parameter applicable to the target model, it is considered that the model configuration monitoring result matches the configuration parameter applicable to the target model.

Situation 4: if the configuration parameter applicable to the target model includes multiple ones among the application scenario of a model, the effective area of a model, and the processing parameter of a model, when one or more of Condition 1 to Condition 3 as follows are satisfied, it is considered that the model configuration monitoring result matches the configuration parameter applicable to the target model. Condition 1 to Condition 3 respectively are, the application scenario of a model in the model configuration monitoring result matches the application scenario applicable to the target model, and an area where a model is located in the model configuration monitoring result matches the effective area applicable to the target model, and the processing parameter of a model in the model configuration monitoring result matches the processing parameter applicable to the target model.

Whether the application scenario of a model in the model configuration monitoring result matches the application scenario of a model in the configuration parameter applicable to the target model, can be determined through the several manners as follows.

Manner C: if the application scenario of a model in the model configuration monitoring result matches all parameters of the application scenario of a model in the configuration parameter applicable to the target model, it is considered that the application scenario of a model in the model configuration monitoring result matches the application scenario of a model in the configuration parameter applicable to the target model.

Manner D: if the application scenario of a model in the model configuration monitoring result matches partial parameters of the application scenario of a model in the configuration parameters applicable to the target model, it is considered that the application scenario of a model in the model configuration monitoring result matches the application scenario of a model in the configuration parameters applicable to the target model. The partial parameters can be certain specific parameters, or the number of the partial parameters reaches a preset proportion.

Analogously, the method for determining whether the effective area of a model in the model configuration monitoring result matches the effective area of a model in the configuration parameter applicable to the target model, and whether the processing parameter of a model in the model configuration monitoring result matches the processing parameter of a model in the configuration parameter applicable to the target model, are similar, which will not be repeated.

More specifically, for a certain indicator or configuration in the monitoring result, whether the corresponding indicator or configuration in the performance configuration parameter matches the corresponding parameter or configuration in the monitoring result can be determined through the several manners as follows.

For any indicator among model accuracy, cosine similarity, output gain, reference signal overhead reduction, and throughput, if the indicator in the monitoring result is greater than or equal to the corresponding indicator in the parameter of the target model, it is considered that the indicator in the monitoring result matches the corresponding indicator in the parameter of the target model. For example, for the model accuracy, if the model accuracy in the parameter of the target model is 80%, when the model accuracy in the monitoring result is greater than or equal to 80%, it indicates that the model accuracy in the monitoring result matches the model accuracy in the parameter of the target model; otherwise, it does not match.

For any indicator among the variation in model accuracy, the variation in cosine similarity, and the variation in output gain, if the indicator determined based on the monitoring results is greater than or equal to the corresponding indicator in the parameter of the target model, it is considered that the indicator determined based on the monitoring result matches the corresponding indicator in the parameter of the target model. For example, for the variation in model accuracy, if the variation in model accuracy in the parameter of the target model is 10%, when the variation in model accuracy calculated based on the model accuracy in the monitoring result is greater than or equal to 10%, it indicates that the variation in model accuracy calculated based on the model accuracy in the monitoring result matches the variation in model accuracy in the parameter of the target model; otherwise, it does not match.

When calculating the variation in model accuracy based on the model accuracy in the monitoring result, the calculation can be performed based on the model accuracy in a previous monitoring result and the model accuracy in a current monitoring result. For example, the variation in model accuracy = the model accuracy in the current monitoring result - the model accuracy in the previous monitoring result. The calculation processes for other changes in the monitoring results are similar, which will not be repeated here.

For a measurement result of a model input and/or a model output, when the indicator in the monitoring result is the same as the corresponding indicator in the parameter of the target model, it is considered that the indicator in the monitoring result matches the corresponding indicator in the parameter of the target model. For example, for the measurement result of a model input, when the measurement result of a model input in the parameter of the target model is "match", and the measurement result of a model input in the monitoring result is also "match", it is considered that the indicator in the monitoring result matches the corresponding indicator in the parameter of the target model; otherwise, it does not match.

For either of the indicator, delay or error rate, when the indicator in the monitoring result is smaller than or equal to the corresponding indicator in the parameter of the target model, it is considered that the indicator in the monitoring result matches the corresponding indicator in the parameter of the target model. For example, for delay, if the delay in the parameter of the target model is 20ms, when the delay in the monitoring result is 16ms, it indicates that the delay in the monitoring result matches the delay in the parameter of the target model; otherwise, it does not match.

For any configuration among urban, non-urban, high-speed mobility, medium-speed mobility, low-speed mobility, uniform-speed mobility, stationary, a base station height, a terminal device height, and a preset inter-site distance in the application scenario, when a certain scenario category in the monitoring result is the same as the corresponding scenario category in the parameter of the target model, it is considered that the configuration in the monitoring result matches the corresponding configuration in the parameter of the target model. The scenario category refers to scenarios classified based on a same criterion. For example, urban and non-urban belong to one scenario category, with a classifying criterion being whether or not it is urbanized. High-speed mobility, medium-speed mobility, low-speed mobility, uniform-speed mobility, and stationary belong to a scenario category, with a classifying criterion being a moving speed of a terminal device. A base station height, a terminal device height, and a preset inter-site distance can be of different scenario categories, or a same scenario category (in such case, a classifying criterion can be a device height or distance interval). For example, for scenarios classified based on a classifying criterion being a moving speed of a terminal device, when a moving scenario of the terminal device in the monitoring result is high-speed mobility, and the application scenario in the parameter of the target model includes high-speed mobility, it indicates that the scenario classified based on a classifying criterion being a moving speed of a terminal device in the monitoring result matches the application scenario in the parameter of the target model; otherwise, it does not match.

For either of the configurations, a terminal device moving speed or terminal device distribution in the application scenario, when the configuration in the monitoring result satisfies the corresponding configuration in the parameter of the target model, it is considered that the configuration in the monitoring result matches the corresponding configuration in the parameter of the target model. For example, for a terminal device moving speed, when the terminal device moving speed in the monitoring result belongs to the terminal device moving speed (assuming the speed is a range) in the parameter of the target model, it indicates that the configuration in the monitoring result matches the corresponding configuration in the parameter of the target model; otherwise, it does not match.

For any configuration among a frequency, an RA, a TA, a cell, and a beam in the effective area of a model, when a location of a terminal device in the monitoring result is in an area indicated by the effective area in the parameter of the target model, it is considered that the location of the terminal device in the monitoring result matches the effective area in the parameter of the target model. For example, when a location of a terminal device in the monitoring result is in a cell in the parameter of the target model, it indicates that the location of a terminal device in the monitoring result matches the effective area in the parameter of the target model; otherwise, it does not match.

For either of the configurations, a model input data processing method and a model output data processing method in the processing parameter of a model, when the configuration in the monitoring result belongs to the corresponding configuration in the parameter of the target model, it is considered that the configuration in the monitoring result matches the corresponding configuration in the parameter of the target model. For example, for the model input data processing method, when the model input data processing method adopted by a terminal device in the monitoring result is one or more types of the model input data processing methods in the parameter of the target model, it indicates that the configuration in the monitoring result matches the corresponding configuration in the parameter of the target model; otherwise, it does not match.

For one or more among data precision, model complexity, other configurations, model structure, when the configuration in the monitoring result satisfies the corresponding configuration in the parameter of the target model, it is considered that the configuration in the monitoring result matches the corresponding configuration in the parameter of the target model. For example, for the data precision, when the data precision in the monitoring result satisfies the data precision in the parameter of the target model, it indicates that the configuration in the monitoring result matches the corresponding configuration in the parameter of the target model; otherwise, it does not match.

For another example, for required computational power in the model complexity, when available computational power of a terminal device in the monitoring result satisfies the required computational power of the target model, it indicates that the configuration in the monitoring result matches the corresponding configuration in the parameter of the target model; otherwise, it does not match. The available computational power of a terminal device in the monitoring result satisfying the required computational power of the target model, specifically means: when the available computational power of the terminal device is higher than the required computational power of the target model, it is determined that the available computational power of the terminal device matches the required computational power of the target model.

For a same indicator or configuration, the indicator or configuration in the monitoring result and the corresponding indicator or configuration in the parameter of the target model can be determined through a same method, or through different methods, which is not limited.

In the embodiment, the terminal device can obtain a parameter of a target model; and determines, based on the parameter of the target model, whether to perform a model updating process of the target model. The present application provides a solution for determining whether to perform a model update.

In the embodiment of the present application, the factors of both aspects of model performance and model configuration are considered to determine whether to perform the model updating process of the target model, the terminal device is prevented from initiating model update based solely on factors of a single aspect, thereby avoiding frequent model updates on the terminal device, and ensuring normal service provision for users.

In the following, another model updating method according to the present application will be explained in detail through another possible second embodiment.

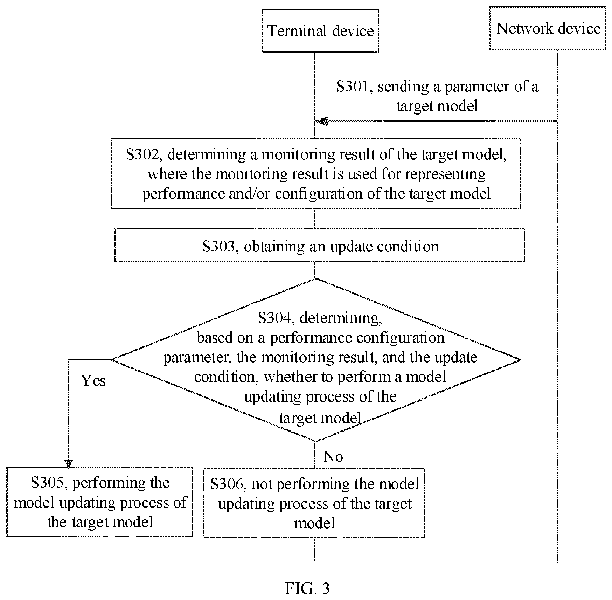

FIG. 3 is another schematic flowchart of a model updating method according to a second embodiment of the present application. The method can be performed by a terminal device or by a model updating apparatus provided in the terminal device. The apparatus can be a chip, a chip module, an integrated development environment (integrated development environment, IDE), or the like. With reference to FIG. 3, the method includes the following steps.

S301, obtaining a parameter of a target model.

For the related descriptions of the parameter of the target model, reference can be made to S201 in the first embodiment, which will not be repeated here.

S302, determining a monitoring result of the target model, where the monitoring result is used for representing performance and/or configuration of the target model.

S303, obtaining an update condition.

S304, determining, based on a performance configuration parameter, the monitoring result, and the update condition, whether to perform a model updating process of the target model.

The terminal device can decide whether the monitoring result satisfies the update condition to determine whether to perform the model updating process of the target model. When the monitoring result satisfies the update condition, S405 is performed, and when the monitoring result does not satisfy the update condition, S406 is performed.

S305, performing the model updating process of the target model.

S306, determining not to perform the model updating process of the target model.

In the embodiment, the terminal device can obtain the parameter of the target model, then determine the monitoring result of the target model, subsequently obtain the update condition, and determine, based on the performance configuration parameter, the monitoring result, and the update condition, whether to perform the model updating process of the target model. When the monitoring result satisfies the update condition, it is determined to perform the model updating process of the target model, and when the monitoring result does not satisfy the update condition, it is determined not to perform the model updating process of the target model. By means of determining whether the performance monitoring result and/or the configuration monitoring result of the target model satisfies the condition for performing a model update, the factors of both aspects of model performance and model configuration are considered, such that the terminal device is prevented from initiating model update based solely on factors of a single aspect, avoiding frequent model updates on the terminal device, thereby ensuring normal service provision for users.

The monitoring objective can be used for indicating the terminal device to obtain a corresponding update condition based on the monitoring objective, so as to further flexibly indicate the terminal device to determine whether to perform the model updating process of the target model.

It should be understood that the network device can configure, based on an application scenario, a function, and other factors, an appropriate monitoring objective for the target model, such that the terminal device can monitor the target model more precisely.

In the following, another model updating method according to the present application will be explained in detail through another possible third embodiment.

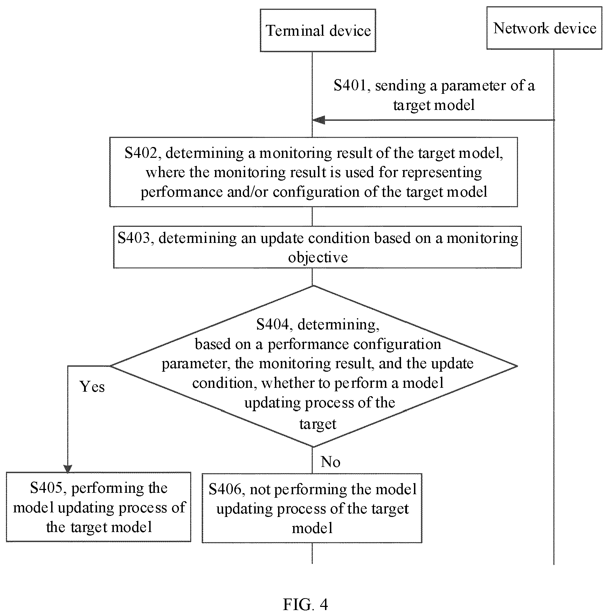

FIG. 4 is yet another schematic flowchart of a model updating method according to a third embodiment of the present application. The method can be performed by a terminal device or by a model updating apparatus provided in the terminal device. The apparatus can be a chip, a chip module, an integrated development environment (integrated development environment, IDE), or the like. With reference to FIG. 4, the method includes the following steps.

S401, obtaining a parameter of a target model.

For the related descriptions of the parameter of the target model, reference can be made to S201 in the first embodiment, which will not be repeated here.

S402, determining a monitoring result of the target model, where the monitoring result is used for representing performance and/or configuration of the target model.

The terminal device, upon obtaining the parameter, can obtain the monitoring result of the target model based on the parameter. The monitoring result includes a model performance monitoring result and/or a model configuration monitoring result, where the model performance monitoring result is used for representing the performance of the target model, and the model configuration monitoring result is used for representing the configuration of the target model.

S403, obtaining an update condition based on a monitoring objective.

S404, determining, based on a performance configuration parameter, the monitoring result, and the update condition, whether to perform a model updating process of the target model.

The terminal device can decide whether the monitoring result satisfies the update condition to determine whether to perform the model updating process of the target model. When the monitoring result satisfies the update condition, S405 is performed, and when the monitoring result does not satisfy the update condition, S406 is performed.

S405, performing the model updating process of the target model.

S406, determining not to perform the model updating process of the target model.

For the descriptions in the embodiment related to the specific implementations, reference can be made to the first embodiment, which will not be repeated here.

In the embodiment, the terminal device can obtain the parameter of the target model that is sent by the network device, then determine the monitoring result of the target model, subsequently obtain the update condition based on the monitoring objective, and determine, based on the performance configuration parameter, the monitoring result, and the update condition, whether to perform the model updating process of the target model. When the monitoring result satisfies the update condition, it is determined to perform the model updating process of the target model, and when the monitoring result does not satisfy the update condition, it is determined not to perform the model updating process of the target model. The terminal device determines the update condition based on the monitoring objective indicated by the network device, and further determine whether to perform the model updating process of the target model by prioritizing either model performance or model configuration, such that the terminal device is prevented from frequently initiating model update when factors of only one single aspect satisfy the preset condition, thereby ensuring normal service provision for users.

In the foregoing method embodiments, the parameter of the target model can be sent by the network device, and correspondingly, the terminal device receives the parameter of the target model. In the following, through another possible embodiment, the interaction between the terminal device and the network device is explained.

FIG. 5 is still another schematic flowchart of a model updating method according to a fourth embodiment of the present application. With reference to FIG. 5, the method includes the following steps.

S501, a network device sends a parameter of a target model, and correspondingly, a terminal device receives the parameter of the target model that is sent by the network device.

Specifically, the network device can send the parameter of the target model through the following manners.

### Manner 1

In Manner 1, the network device sends the parameter of the target model through broadcasting, for example, through a System Information Block (System Information Block, SIB), or paging, etc.

### Manner 2

In Manner 2, the network device sends the parameter of the target model through RRC signaling, Non-access Stratum (Non-access Stratum, NAS) signaling, etc. Correspondingly, the terminal device can receive the parameter of the target model in a connected state.

S502, the terminal device determines, based on the parameter of the target model, whether to perform a model updating process of the target model.

The terminal device, upon obtaining the parameter, can monitor the target model based on the parameter to determine whether to perform the model updating process of the target model.

As an example, the terminal device can perform performance monitoring and/or configuration monitoring on the target model; then determine, based on the monitoring result, whether the monitoring result satisfies the update condition; and when the monitoring result satisfies the update condition, determine to perform the model updating process of the target model. The monitoring result can include a model performance monitoring result and/or a model configuration monitoring result.

It should be understood that when the monitoring result does not satisfy the update condition, it is determined not to perform the model updating process of the target model.

For specific implementations, reference can be made to the first embodiment, which will not be repeated here.

In the embodiment, the terminal device can obtain the parameter of the target model that is sent by the network device and then determine, based on the parameter, whether to perform the model updating process of the target model. The present application provides a solution for determining whether to perform a model update.

FIG. 6 is a schematic structural diagram of a model updating apparatus according to a fifth embodiment of the present application. With reference to FIG. 6, the communication apparatus 60 includes: an obtaining module 601 and a determining module 602.

The obtaining module 601 is configured to obtain a parameter of a target model.

The determining module 602 is configured to determine, based on the parameter of the target model, whether to perform a model updating process of the target model.

In a possible implementation, the parameter of the target model includes a performance configuration parameter and/or a monitoring objective.
the performance configuration parameter includes one or more of the following information: a model performance indicator of the target model, and a configuration parameter applicable to the target model;
the monitoring objective is any one of the following:
   performance;
   configuration; and
   performance and configuration.

In a possible implementation, the obtaining module 601 is specifically configured to:
obtain model indication information; and
determine, based on the model indication information, the parameter of the target model.
the model indication information is one or more of the following:
   information for indicating a model;
   information for indicating a use case;
   information for indicating a function;
   model performance indicator of a model;
   configuration parameter applicable to a model; and
   a monitoring objective corresponding to a model.

In a possible implementation, the obtaining module 602 is specifically configured to:
determine a monitoring result of the target model, where the monitoring result is used for representing performance and/or configuration of the target model.
the determining module 602 is specifically configured to:
   determine, based on the monitoring result and the parameter of the target model, whether to perform the model updating process of the target model.

In a possible implementation, the obtaining module 601 is specifically configured to:
obtain an update condition;
the determining module 602 is specifically configured to:
   determine, based on a performance configuration parameter, the monitoring result, and the update condition, whether to perform a model updating process of the target model.

In a possible implementation, the determining module 602 is specifically configured to:
determine an update condition based on the monitoring objective; and
determine, based on a performance configuration parameter, the monitoring result, and the update condition, whether to perform a model updating process of the target model.

In a possible implementation, the determining module 602 is specifically configured to:
when the monitoring result and the performance configuration parameter satisfy the update condition, determine to perform the model updating process of the target model.

In a possible implementation, when the monitoring result includes a model performance monitoring result, the update condition is that the model performance monitoring result does not match the model performance indicator of the target model;
when the monitoring result includes a model configuration monitoring result, the update condition is that the model configuration monitoring result does not match the configuration parameter applicable to the target model; and
when the monitoring result includes both a model performance monitoring result and a model configuration monitoring result, the update condition is: the model performance monitoring result does not match the model performance indicator of the target model, and the model configuration monitoring result does not match the configuration parameter applicable to the target model.

In a possible implementation, a model performance indicator of the target model includes one or more of the following: an intermediate indicator, and a system performance indicator;
a configuration parameter applicable to the target model includes one or more of the following: an application scenario of a model, an effective region of a model, and a processing parameter of a model.

In a possible implementation, the intermediate indicator includes one or more of the following:
model accuracy;
variation in model accuracy;
cosine similarity;
variation in cosine similarity;
a measurement result of a model input and/or a model output;
output gain;
variation in output gain; and
reference signal overhead reduction.

In a possible implementation, the system performance indicator includes one or more of the following:
throughput;
latency;
an error rate;
model accuracy;
variation in model accuracy.

The apparatus according to the embodiment can be used to perform the technical solutions based on the model updating method according to the foregoing method embodiments. The specific implementation and technical effect thereof are similar, which will not be repeated here.

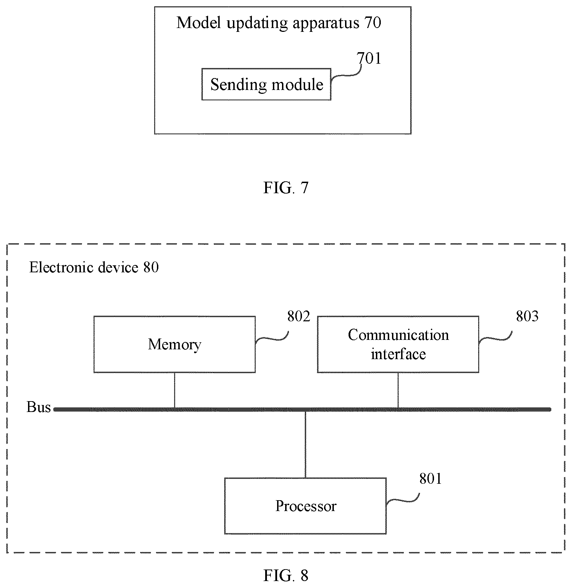

FIG. 7 is a schematic structural diagram of a model updating apparatus according to a sixth embodiment of the present application. With reference to FIG. 7, the communication apparatus 70 includes: a sending module 701.

The sending module 701 is configured to send a parameter of a target model or send model indication information, where the parameter of the target model is used for determining whether to perform a model updating process of the target model, and the model indication information is used for determining the parameter of the target model;
the model indication information is one or more of the following:
information for indicating a model;
information for indicating a use case;
information for indicating a function;
model performance indicator of a model;
configuration parameter applicable to a model; and
a monitoring objective corresponding to a model.

In a possible implementation, the parameter of the target model includes a performance configuration parameter and/or a monitoring objective.

The performance configuration parameter includes one or more of the following information: a model performance indicator of the target model, and a configuration parameter applicable to the target model;
the monitoring objective is any one of the following:
performance;
configuration; and
performance and configuration.

In a possible implementation, a model performance indicator of the target model includes one or more of the following: an intermediate indicator, and a system performance indicator;
a configuration parameter applicable to the target model includes one or more of the following: an application scenario of a model, an effective region of a model, and a processing parameter of a model.

In a possible implementation, the intermediate indicator includes one or more of the following:
model accuracy;
variation in model accuracy;
cosine similarity;
variation in cosine similarity;
a measurement result of a model input and/or a model output;
output gain;
variation in output gain; and
reference signal overhead reduction.

In a possible implementation, the system performance indicator includes one or more of the following:
throughput;
latency;
an error rate;
model accuracy;
variation in model accuracy.

The apparatus according to the embodiment can be used to perform the technical solutions based on the model updating method according to the foregoing method embodiments. The implementation principle and technical effect thereof are similar, which will not be repeated here.

FIG. 8 is a schematic structural diagram of an electronic device according to a seventh embodiment of the present application. As shown in FIG. 8, the electronic device 80 may include: at least one processor 801 and a memory 802.

The memory 802 is configured to store a program. Specifically, the program can include a program code, and the program code includes a computer operation instruction.

The memory 802 may include a random access memory (Random Access Memory, RAM), and may further include a non-volatile memory (Non-volatile Memory), such as at least one disk memory.

The processor 801 is configured to execute the computer executable instructions stored in the memory 802 to implement the methods described in the foregoing method embodiments. The processor 801 may be a Central Processing Unit (Central Processing Unit, CPU), or an Application Specific Integrated Circuit (Application Specific Integrated Circuit, ASIC), or one or more integrated circuits configured to implement the embodiments of the present application.

Optionally, the electronic device 80 may further include: a communication interface 803. In a specific implementation, when the communication interface 803, the memory 802, and the processor 801 are implemented independently, the communication interface 803, the memory 802, and the processor 801 can be interconnected and communicate with each other through a bus. The bus may be an Industry Standard Architecture (Industry Standard Architecture, ISA) bus, a Peripheral Component Interconnect (Peripheral Component, PCI) bus, or an Extended Industry Standard Architecture (Extended Industry Standard Architecture, EISA) bus, or the like. The bus may be divided into an address bus, a data bus, or a control bus, etc., which does not imply that there is only a single bus or only one type of bus.

Optionally, in a specific implementation, when the communication interface 803, the memory 802, and the processor 801 are implemented by being integrated into a single chip, the communication interface 803, the memory 802, and the processor 801 can communicate with each other through an internal interface.

The electronic device 80 can be a chip, a chip module, an Integrated Development Environment (Integrated Development Environment, IDE), a terminal device, a network device, etc.

The electronic device according to the embodiment can be used to perform the technical solutions according to the foregoing method embodiments. The specific implementation and technical effect thereof are similar, which will not be repeated here.

An eighth embodiment of the present application provides a computer readable storage medium, which may include various media capable of storing computer executable instructions, such as a U disk, a portable hard drive, a Read-Only Memory (Read-Only Memory, ROM), a RAM, a magnetic disk, or an optical disc. Specifically, the computer readable storage medium stores computer executable instructions. When the computer executable instructions are executed by a computer, the technical solutions illustrated in the foregoing method embodiments are implemented. The specific implementation and technical effect thereof are similar, which will not be repeated here.

A ninth embodiment of the present application provides a computer program product, including a computer program, when the computer program is executed by a computer, the technical solutions illustrated in the foregoing method embodiments are implemented. The specific implementation and technical effect thereof are similar, which will not be repeated here.

A tenth embodiment of the present application provides a chip, storing thereon a computer program, where when the computer program is executed by the chip, the technical solutions illustrated in the foregoing method embodiments are implemented.

In a possible implementation, the chip can also be a chip module.

An eleventh embodiment of the present application provides a modular device including a power module, a storage module, and a chip module.

The power module is configured to supply electric energy for the modular device.

The storage module is configured to store data and an instruction;

The chip module is configured to implement the technical solutions illustrated in the foregoing method embodiments. The specific implementation and technical effect thereof are similar, which will not be repeated here.

Those skilled in the art will readily envision other implementations of the present disclosure after considering the specification and practicing the application disclosed herein. The present invention is intended to cover any variations, purposes or adaptive changes of the present disclosure, and these variations, purposes or adaptive changes conform to a general principle of the present disclosure and include common knowledge or conventional technical means in the technical field not disclosed in the present disclosure. The specification and the embodiments are merely regarded to be exemplary, and the true scope and spirit of the present disclosure are appointed by the following claims.

It should be understood that the present disclosure is not limited to precise structures which have been described above and shown in the accompanying drawings, and various modifications and alterations may be made without departing from the scope thereof. The scope of the present disclosure is limited only by the appended claims.

In the present application, the term "and/or" herein is merely a description of the association between associated objects, which indicates that there may be three kinds of relationships, for example, A and/or B may indicate three situations where A exists alone, both A and B exist, and B exists alone. Additionally, the character "/" herein indicates that contextual objects are in an "or" relationship.

The expression "at least one (item) of the following" or similar phrases refers to any combination of these items, including a single item (one) or any combination of a plurality of items (ones). For example, at least one of a, b, or c can indicate: a, b, c, a and b, a and c, b and c, or a, b, and c. Here, each of a, b, and c itself can be an element or a set containing one or more elements.

In the present application, "at least one" refers to one or more. And "a plurality of" refers to two or more. The descriptors "first", "second" etc., as used in the embodiments of the present application, are solely for the purpose of illustration and differentiation of the described objects, without implying any order or particular limitation to the number of devices in the embodiments of the present application, which does not constitute any limitation to the embodiments of the present application. For example, the terms of first threshold and second threshold are merely used to distinguish different thresholds and do not imply any differences between the two thresholds in value, priority, or importance.

In the present application, "for example", "in some embodiments", "in some other embodiments" and the like are used to provide examples, illustrations, or explanations. Any embodiment or design described as an "example" in the present application should not be interpreted as being more preferable or advantageous over other embodiments or designs. Rather, the use of the term "example" is intended to present concepts in a specific manner.

In the present application, terms such as "of (of)", "corresponding (corresponding, relevant)", "corresponding (corresponding)", and "associated" may sometimes be used interchangeably. It should be noted that when their differences are not emphasized, the meanings they convey are consistent. In the embodiments of the present application, communication and transmission may sometimes be used interchangeably. It should be noted that when their differences are not emphasized, the meanings they convey are consistent. For example, transmission may include sending and/or receiving, and can function as both a noun and a verb.

In the present application, "equal to" can be used in conjunction with "less than" or "greater than", but not simultaneously with both of "less than" or "greater than". "Equal to", when being used in conjunction with "less than", is applicable to the technical solution adopted for "less than". "Equal to", when being used in conjunction with "greater than", is applicable to the technical solution adopted for "greater than".

## Claims

1. A model updating method, wherein the method comprises:
obtaining a parameter of a target model; and
determining, based on the parameter of the target model, whether to perform a model updating process of the target model.

2. The method according to claim 1, wherein the parameter of the target model comprises a performance configuration parameter and/or a monitoring objective;
the performance configuration parameter comprises one or more of the following information: a model performance indicator of the target model, and a configuration parameter applicable to the target model;
the monitoring objective is any one of the following:
performance;
configuration; and
performance and configuration.

3. The method according to claim 2, wherein the obtaining the parameter of the target model comprises:
obtaining model indication information; and
determining, based on the model indication information, the parameter of the target model;
the model indication information is one or more of the following:
information for indicating a model;
information for indicating a use case;
information for indicating a function;
a model performance indicator of a model;
a configuration parameter applicable to a model; and
a monitoring objective corresponding to a model.

4. The method according to claim 2 or 3, wherein the method further comprises:
determining a monitoring result of the target model, wherein the monitoring result is used for representing performance and/or configuration of the target model;
the determining, based on the parameter of the target model, whether to perform the model updating process of the target model, comprises:
determining, based on the monitoring result and the parameter of the target model, whether to perform the model updating process of the target model.

5. The method according to claim 4, wherein the method further comprises:
obtaining an update condition;
the determining, based on the monitoring result and the parameter of the target model, whether to perform the model updating process of the target model, comprises:
determining, based on the performance configuration parameter, the monitoring result, and the update condition, whether to perform the model updating process of the target model.

6. The method according to claim 4, wherein the determining, based on the monitoring result and the parameter of the target model, whether to perform the model updating process of the target model, comprises:
obtaining an update condition based on the monitoring objective;
determining, based on the performance configuration parameter, the monitoring result, and the update condition, whether to perform the model updating process for the target model.

7. The method according to claim 5 or 6, wherein the determining, based on the performance configuration parameter, the monitoring result, and the update condition, whether to perform the model updating process of the target model, comprises:
when the monitoring result and the performance configuration parameter satisfy the update condition, determining to perform the model updating process of the target model.

8. The method according to claim 7, wherein,
when the monitoring result comprises a model performance monitoring result, the update condition is that the model performance monitoring result does not match the model performance indicator of the target model;
when the monitoring result comprises a model configuration monitoring result, the update condition is that the model configuration monitoring result does not match the configuration parameter applicable to the target model; and
when the monitoring result comprises both a model performance monitoring result and a model configuration monitoring result, the update condition is: the model performance monitoring result does not match the model performance indicator of the target model, and the model configuration monitoring result does not match the configuration parameter applicable to the target model.

9. The method according to any one of claims 1 to 8, wherein,
a model performance indicator of the target model comprises one or more of the following: an intermediate indicator, and a system performance indicator; and
a configuration parameter applicable to the target model comprises one or more of the following: an application scenario of a model, an effective area of a model, and a processing parameter of a model.

10. The method according to claim 9, wherein the intermediate indicator comprises one or more of the following:
model accuracy;
variation in model accuracy;
cosine similarity;
variation in cosine similarity;
a measurement result of a model input and/or a measurement result of a model output;
output gain;
variation in output gain; and
reference signal overhead reduction.

11. The method according to claim 9 or 10, wherein the system performance indicator comprises one or more of the following:
throughput;
latency;
an error rate;
model accuracy; and
variation in model accuracy.

12. A model updating method, wherein the method comprises:
sending a parameter of a target model or sending model indication information, wherein the parameter of the target model is used for determining whether to perform a model updating process of the target model, and the model indication information is used for determining the parameter of the target model;
the model indication information is one or more of the following:
information for indicating a model;
information for indicating a use case;
information for indicating a function;
a model performance indicator of a model;
a configuration parameter applicable to a model; and
a monitoring objective corresponding to a model.

13. The method according to claim 12, wherein the parameter of the target model comprises a performance configuration parameter and/or a monitoring objective;
the performance configuration parameter comprises one or more of the following information: a model performance indicator of the target model, and a configuration parameter applicable to the target model;
the monitoring objective is any one of the following:
performance;
configuration; and
performance and configuration.

14. The method according to claim 12 or 13, wherein,
a model performance indicator of the target model comprises one or more of the following: an intermediate indicator, and a system performance indicator;
a configuration parameter applicable to the target model comprises one or more of the following: an application scenario of a model, an effective area of a model, and a processing parameter of a model.

15. The method according to claim 14, wherein the intermediate indicator comprises one or more of the following:
model accuracy;
variation in model accuracy;
cosine similarity;
variation in cosine similarity;
a measurement result of a model input and/or a measurement result of a model output;
output gain;
variation in output gain; and
reference signal overhead reduction.

16. The method according to claim 14 or 15, wherein the system performance indicator comprises one or more of the following:
throughput;
latency;
an error rate;
model accuracy; and
variation in model accuracy.

17. A model updating apparatus, comprising:
an obtaining module, configured to obtain a parameter of a target model; and
a determining module, configured to determine, based on the parameter of the target model, whether to perform a model updating process of the target model.

18. A model updating apparatus, comprising:
a sending module, configured to send a parameter of a target model or send model indication information, wherein the parameter of the target model is used for determining whether to perform a model updating process of the target model, and the model indication information is used for determining the parameter of the target model;
the model indication information is one or more of the following:
information for indicating a model;
information for indicating a use case;
information for indicating a function;
a model performance indicator of a model;
a configuration parameter applicable to a model; and
a monitoring objective corresponding to a model.

19. An electronic device, comprising: a processor, and a memory in communication connection with the processor; wherein,
the memory stores a computer executable instruction; and
the processor executes the computer executable instruction stored in the memory to implement the model updating method according to any one of claims 1 to 11.

20. An electronic device, comprising: a processor, and a memory in communication connection with the processor; wherein,
the memory stores a computer executable instruction; and
the processor executes the computer executable instruction stored in the memory to implement the model updating method according to any one of claims 12 to 16.

21. A computer readable storage medium, storing thereon a computer executable instruction, wherein when the computer executable instruction is run by a computer, the model updating method according to any one of claims 1 to 16 is implemented.
